# EUROPEAN PATENT APPLICATION

(11) **EP 4 361 953 A1**
(43) Date of publication of application: **01.05.2024**
(21) Application number: 22203903.4
(22) Date of filing: 26.10.2022
(51) Int. Cl.: G06T 7/70

(54) **PROCESSING A 3D IMAGE**

(71) Applicant: Koninklijke Philips N.V., 5656 AG Eindhoven (NL)
(72) Inventor: SCHMIDT-RICHBERG, Alexander, 5656AG Eindhoven (NL); ORASANU, Eliza Teodora, 5656AG Eindhoven (NL); FRANZ, Astrid Ruth, 5656AG Eindhoven (NL); LORENZ, Cristian, 5656AG Eindhoven (NL)
(74) Representative: Philips Intellectual Property & Standards

(57) **Abstract**

A mechanism for determining the location of a desired plane (230) within a 3D image. A machine-learning algorithm is used to determine a first set of one or more offsets (251, 252), between initial locations (221, 222) within a 2D slice (210) of the 3D image and predetermined locations within the desired plane, and a second set of one or more offsets (261, 262), between the same initial locations and a location of an anatomical landmark (240). An offset is a spatial offset between the initial location and another location.

## Description

### FIELD OF THE INVENTION

The present invention relates to the field of 3D images, and in particular to the processing of 3D images.

### BACKGROUND OF THE INVENTION

In the medical field, there is an increasing interest in the use of 3D images (i.e., a 3D medical image) to assess and/or analyze a target anatomical structure. In particular, 3D images have been identified as providing additional contextual information for aiding in the analysis of the target anatomical structure.

However, the large amount of information and detail contained within a 3D image can affect the ease of analysis by a clinician. Moreover, a number of standardized tests for analyzing a target anatomical structure require the use of a 2D image containing a certain view of the target anatomical structure and/or a certain anatomical landmark within the anatomical structure.

For instance, in fetal screening, the abdominal circumference (AC) is a standard measurement to estimate fetal size and growth. Existing screening guidelines define criteria that a 2D image must meet to enable valid and comparable biometry measurement. For example, the stomach and umbilical vein must be visible while the heart and/or kidney should not, the scan plane for the 2D image should be orthogonal to the head-to-toe axis, and the shape of the abdomen should be as round as possible.

### SUMMARY OF THE INVENTION

The invention is defined by the independent claims. Dependent claims define advantageous embodiments.

According to examples in accordance with an aspect of the invention, there is provided a computer-implemented method of processing a 3D image of a target anatomical structure.

The computer-implemented method comprises: obtaining a 2D slice of the 3D image; processing the 2D slice using an object detection technique to identify a bounding region containing a representation of the target anatomical structure; defining, within the bounding region, a set of initial locations; and processing the 3D image using a machine-learning method to predict, for each initial location: a set of one or more first predicted offsets, each first predicted offset being a predicted spatial offset, with respect to the 3D image, between said initial location and a predetermined location within a desired plane of the 3D image; and a set of one or more second predicted offsets, each second predicted offset being a predicted spatial offset, with respect to the 3D image, between said initial location and a location of an anatomical landmark, outside of the desired plane, of the target anatomical structure.

The proposed approach provides a technique for identifying or defining a spatial offset between a 2D slice and a desired 2D plane or anatomical landmark within a 3D image. The defined spatial offset can be used, for instance, to produce a 2D image containing a representation of the desired plane or landmark and/or to provide guidance on how to move/modify an image capturing system in order to capture an image containing the desired plane or landmark.

The technique herein advanced makes use of initial locations defined within a bounding region containing a representation of the target anatomical structure. This provides a consistent baseline for defining any spatial offsets, for ease in producing an image and/or modifying the image capturing system.

The bounding region may have a predetermined shape, e.g., a rectangle, circle or square. The bounding region defines the predicted region that contains a representation of the target anatomical structure.

As a set of one or more first predicted offsets is generated for each initial location, sets (i.e., a plurality of sets) of one or more first predicted offsets are produced.

The method may further comprise a step of processing the set of initial locations, the sets of one or more first predicted offsets and the 3D image to produce at least one image, smaller than the 3D image, containing a representation of one or more of the one or more desired locations. The present disclosure recognizes that the 3D image is likely to contain sufficient information to produce an image (e.g., a 2D image) containing the desired locations or view plane. Thus, there is provided an automated approach for providing an image of a desired view of the anatomical structure without requiring movement or additional input from a clinician or operator of an image capturing system.

In some examples, each initial location is associated with a different, respective desired location within the desired plane of the 3D image for viewing the target anatomical structure; and for each initial location, the set of one or more first predicted offsets comprises a single predicted offset being a predicted spatial offset between the initial location and its respective desired location.

Optionally, the method further comprises estimating the position of the desired plane within the 3D image by processing the set of initial locations and the set of first predicted offsets produced for each initial location; and processing the 3D image, using the estimated position of the desired plane, to produce a 2D image representing the desired plane.

In this way, a 2D image containing a representation of a desired view of the anatomical structure is produced. This is particularly advantageous when one or more 2D views are essential or mandated for performing standardized analysis or monitoring techniques.

Estimating the position of the desired plane within the 3D image may be performed by processing the set of initial locations and the set of first predicted offsets produced for each initial location using a linear regression technique.

Each second predicted offset may be a predicted spatial offset, with respect to the 3D image, between an initial location and a location of a same first anatomical landmark of the target anatomical structure.

Preferably, each set of one or more second predicted offsets comprises a plurality of second predicted offsets.

In some examples, the step of defining, within the bounding region, a set of initial locations comprises: defining a grid of cells within the bounding region; and identifying a single location in each cell to thereby define the plurality of initial locations. Preferably, the grid is a regular grid (i.e., with equal or near-equal sized cells). Each cell may be rectangular and/or square. The single location in each cell may be a center-point of the cell or an edge or corner point of the cell.

The 3D image may be defined by a stack of initial 2D slices and the 2D slice may be closer to the centermost slice of the stack of initial 2D slices than either the first or last 2D slice in the stack of initial 2D slices. For instance, the 2D slice may be the centermost slice of the stack of 2D slices.

One recognition of this embodiment is that, during capture of the 3D image by an operator of an image capturing system, it can be assumed that the operator will control the image capturing system such that the desired plane and/or anatomical landmark(s) is/are approximately central with respect to the 3D image. This means that the more central slices of the 3D image are more likely to be only partly offset with respect to the desired plane and/or landmarks. The proposed technique is therefore more accurate when operating under this valid assumption.

The step of processing the 2D slice using a machine-learning method may further comprise producing, for each predicted offset, a confidence value representing a confidence or certainty of the predicted offset.

In some examples, the method further comprises estimating the position of the desired plane within the 3D image by processing, using a linear regression technique, the set of initial locations and the set of first predicted offsets produced for each initial location, wherein the value of one or more weighting parameters of the linear regression technique are responsive to the confidence value of one or more predicted offsets.

There is also proposed a computer-implemented method of training a machine-learning method for predicting the location of a desired plane in a desired 3D image.

The computer-implemented method comprises: obtaining a training dataset comprising a plurality of training entries, each training entry comprising an example 3D image of a target anatomical structure; first information identifying a location of a desired plane within the example 3D image and second information identifying a location of one or more anatomical landmarks, outside of the desired plane, within the example 3D image; and training, using the training dataset, the machine-learning method to predict information identifying the location of the desired plane in the desired 3D image and information identifying the location of one or more anatomical landmarks, outside of the desired plane, in the desired 3D image.

There is also proposed a computer program product comprising computer program code which, when executed on a computing device having a processing system, cause the processing system to perform all of the steps of any herein described method.

There is also proposed a processing system configured to carry out any herein described method.

Thus, there is proposed a processing system for processing a 3D image of a target anatomical structure, the processing system being configured to: obtain a 2D slice of the 3D image; process the 2D slice using an object detection technique to identify a bounding region containing a representation of the target anatomical structure; define, within the bounding region, a set of initial locations; and process the 3D image using a machine-learning method to predict, for each initial location: a set of one or more first predicted offsets, each first predicted offset being a predicted spatial offset, with respect to the 3D image, between said initial location and a predetermined location within a desired plane of the 3D image; and a set of one or more second predicted offsets, each second predicted offset being a predicted spatial offset, with respect to the 3D image, between said initial location and a location of an anatomical landmark, outside of the desired plane, of the target anatomical structure.

In some examples, the processing system is further configured to process the set of initial locations, at least one set of one or more predicted offsets and the 3D image to produce at least one image, smaller than the 3D image, containing a representation of one or more of the one or more desired locations.

There is proposed a processing system for training a machine-learning method for predicting the location of a desired plane in a desired 3D image, the processing system being configured to: obtain a training dataset comprising a plurality of training entries, each training entry comprising an example 3D image of a target anatomical structure; first information identifying a location of a desired plane within the example 3D image and second information identifying a location of one or more anatomical landmarks, outside of the desired plane, within the example 3D image; and train, using the training dataset, the machine-learning method to predict information identifying the location of the desired plane in the desired 3D image and information identifying the location of one or more anatomical landmarks, outside of the desired plane, in the desired 3D image.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flowchart illustrating a method according to an embodiment;
Fig. 2 illustrates a relationship between different locations within a 3D image;
Fig. 3 illustrates the architecture of a machine-learning algorithm for use in an embodiment;
Fig. 4 is a flowchart illustrating a method according to a further embodiment; and
Fig. 5 is a flowchart illustrating a method according to another embodiment.
Fig. 6 is a schematic of a processor according to an embodiment.

### DETAILED DESCRIPTION OF THE EMBODIMENTS

The invention will be described with reference to the Figures.

It should be understood that the detailed description and specific examples, while indicating exemplary embodiments of the invention, are intended for purposes of illustration only and are not intended to limit the scope of the invention. These and other features, aspects, and advantages of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for determining the location of a desired plane within a 3D image. A machine-learning algorithm is used to determine a first set of one or more offsets, between initial locations within a 2D slice of the 3D image and predetermined locations within the desired plane, and a second set of one or more offsets, between the same initial locations and a location of an anatomical landmark. An offset is a spatial offset between the initial location and another location.

The present disclosure recognizes that a machine-learning algorithm that has been trained to simultaneously identify offsets to a desired plane and offsets to at least one anatomical landmark performs more accurate identification of the offsets to the desired plane. This recognition can be used to improve the accuracy of identifying of the desired plane in the 3D image, e.g., for producing a 2D image in the desired plane.

Embodiments can be employed in any scenario in which it is desirable to identify a 2D plane of a 3D medical image. One example environment is in fetal monitoring and/or analysis.

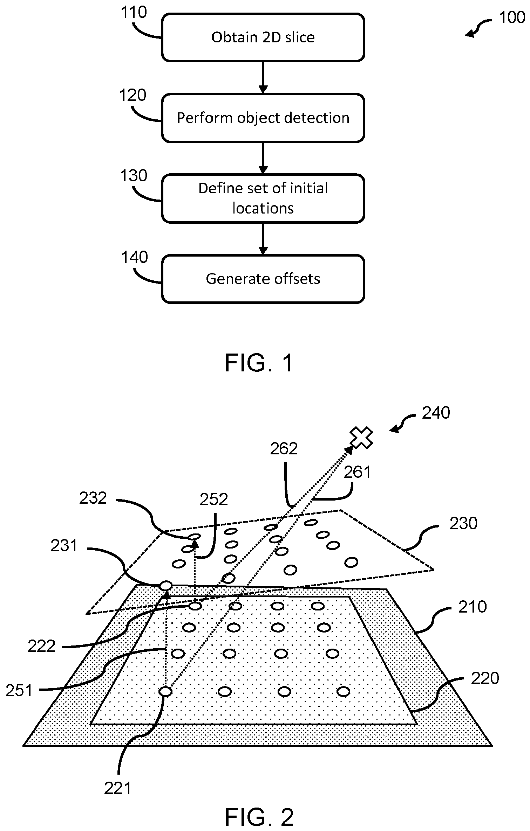

Fig. 1 is a flowchart illustrating the overall approach for processing a 3D image adopted by the present invention. Fig. 1 thereby illustrates a computer-implemented method 100 of processing a 3D image of a target anatomical structure.

The method 100 comprises a step 110 of obtaining a 2D slice of the 3D image. The 2D slice is a planar selection of a part of the 3D image. In particular, the 2D slice may be a slice that lies normal to an axis of the 3D image. Thus, if the 3D image is of size XxYxZ, then the 2D slice is of size X×Y.

The obtained 2D slice is preferably a slice closer to the centermost slice of the 3D image than an end slice. Thus, if the 3D image is defined by a stack of initial 2D slices, the obtained 2D slice is closer to the centermost slice of the stack of initial 2D slices than either the first or last 2D slice in the stack of initial 2D slices. Even more preferably, the obtained 2D slice is the centermost slice of the 3D image.

The method 100 also comprises a step 120 of processing the 2D slice using an object detection technique to identify a bounding region containing a representation of the target anatomical structure (i.e., contain a 2D image of the target anatomical structure).

The bounding region may have a defined shape (e.g., rectangular or circular), as well-established in the art. When having a rectangular shape, a bounding region is commonly labelled a bounding box.

2D object detection is a well-analyzed problem in computer vision, particularly for the generation of a bounding region identifying a desired object or structure. Therefore, a wide variety of approaches exists to carry out step 120. One suitable example is the "you-only-look-once" (YOLO) algorithm as exemplified by Joseph Redmon, Ali Farhadi: YOLO9000: Better, Faster, Stronger, CVPR 2018. Other suitable approaches are suggested by Wang, Guotai, et al. "Interactive medical image segmentation using deep learning with image-specific fine tuning." IEEE transactions on medical imaging 37.7 (2018): 1562-1573.

The size of the bounding region is smaller than the size of the 2D slice. In particular, the bounding region is sized and positioned in an effort to define the bounds of the representation of the target anatomical structure within the 2D slice.

The method 100 also comprises a step 130 of defining, within the bounding region, a set of initial locations.

Step 130 may be carried out, for instance, defining a grid of cells within the bounding region and identifying a single location in each cell to thereby define the plurality of initial locations. The grid may a regular grid (i.e., with equal or near-equal sized cells). Each cell may be rectangular and/or square, e.g., depending upon the dimensions and/or shape of the bounding region. An initial location may be defined to lie at a predetermined or defined location with respect to each cell, e.g., at a center-point of the cell or at predetermined or predefined corner of the cell.

If used, the grid of cells may be of size N × M. Preferably, N = M.

The method 100 also carries out a step 140 of processing the 3D image using a machine-learning method to predict for each initial location: a set of one or more first predicted offsets and a second of one or more second predicted offsets.

A predicted offset is a predicted spatial offset between the initial location and another location.

A spatial offset defines a distance and direction between two points within a 3D space, i.e., with respect to the 3D image. A spatial offset may, for instance, be in the form of a vector identifying the direction and distance between the two relevant locations (e.g., between an initial location and the predetermined location or between an initial location and the location of the anatomical landmark). The vector may, for instance, be formatted in Cartesian or polar form. Other suitable data formats for defining a spatial offset between two points in a 3D image will be apparent to the skilled person.

Each first predicted offset is a predicted spatial offset, with respect to the 3D image, between said initial location and a predetermined location within a desired plane of the 3D image.

The desired plane may represent a plane of the 3D image containing a representation of a desired view and/or cross-section of the target anatomical structure. For instance, if the target anatomical structure is a fetus, then the desired plane may be a plane orthogonal to the head-toe axis that depicts the stomach and umbilical cord.

Each second predicted offset is a predicted spatial offset, with respect to the 3D image, between said initial location and a location of an anatomical landmark, outside of the desired plane, of the target anatomical structure.

In some embodiments, each set of one or more second predicted offsets comprises a plurality of second predicted offsets, wherein each second predicted offset in a same set is a predicted spatial offset, with respect to the 3D image, between the initial location and a location of a same anatomical landmark, outside of the desired plane, of the target anatomical structure.

Thus, any given set of second predicted offsets may comprise a plurality of second predicted offsets between a same initial location and the location of a same anatomical landmark. Different sets are associated with different initial locations.

Examples of anatomical landmarks may depend upon the type of target anatomical structure. For instance, if the target anatomical structure is a fetus, then the anatomical landmark may, for instance, be an eye of the fetus, a finger or toe of the fetus and/or a base of the fetus' spine. As another example, if the target anatomical structure is a heart, then the anatomical landmark may be the entrance to a particular vessel or chamber for the heart. Other suitable examples will be readily apparent to the skilled person.

The machine-learning method is therefore a machine-learning method or technique that has been trained to perform simultaneous identification of the relative location of the desired plane and the relative location(s) of the anatomical landmarks. It has been recognized that machine-learning methods that have been trained to perform simultaneous identification of both of these features have improved performance in identification of information about the desired plane. This means that there is an improved performance for identification of the relative location of the desired plane (i.e., determining the sets of first offsets).

In preferred examples, each initial location is associated with a different, respective desired location within the desired plane of the 3D image for viewing the target anatomical structure. For each initial location, the set of one or more first predicted offsets comprises a single predicted offset being a predicted spatial offset between the initial location and its respective desired location.

Each desired location may effectively represent a particular part or area of the desired plane of the 3D image.

For improved performance of step 140, the input to the machine-learning method for performing step 140 may be a portion or part of the 3D image that is defined by the geometry of the bounding region. The geometry of the bounding region defines the size, shape and position of the bounding region. Thus, the physical location of the voxel values that are fed into the machine-learning method for performing step 140 may depend on the bounding region.

Fig. 2 provides a visual representation of procedure performed by steps 110-140.

Fig. 2 illustrates a 2D slice 210 for which a bounding region 220 has been identified, by processing the 2D slice using a suitable object detection technique. The size of the bounding region 220 is smaller than the size of the 2D slice.

The bounding region 220 is used to define a plurality of initial locations 221, 222. In the illustrated example, each initial location 221, 222 lies at a centerpoint of a cell within a regular grid of cells.

The relative location of a desired plane 230 and an anatomical landmark 240 is also conceptually illustrated.

The purpose of step 140 is to predict or determine one or more first offsets 251, 252 between each initial location 221, 222 and a predetermined location (for that initial location) within the desired plane 230 and one or more second offsets 261, 262 between each initial location 221, 222 and the anatomical landmark(s) 240.

As illustrated in Fig. 2, each initial location may be associated with only a single first offset 251, which defines an offset between the initial location 221 and a corresponding predetermined location 231 within the desired plane 230. Thus, each initial location 221 maps or corresponds to a predetermined location 231 within the desired plane 230.

It will be clear that, for the sake of illustrative clarity, only a subset of all possible initial locations, first offsets and second offsets have been illustrated and/or labelled. The skilled person would readily understand how, in practice, a greater number of locations and/or offsets may exist.

Proposed embodiments make use of a machine-learning algorithm in processing the 3D image to produce the sets of first and second offsets. A machine-learning algorithm is any self-training algorithm that processes input data in order to produce or predict output data. Here, the input data comprises the 3D image (or a portion thereof) and the output data comprises the sets of first and second offsets.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naïve Bayesian models are suitable alternatives.

However, one particularly advantageous form of machine-learning algorithm for generating the first and second offsets (i.e., for use in step 140) is a neural network. Based on current understanding, neural networks seem to be by far the best existing choice for performing the difficult learning task whilst at the same time being capable of meeting almost real-time performance.

One particularly advantageous approach makes use of a multi-resolution neural network as the machine-learning algorithm. Multi-resolution neural networks have been shown to yield state-of-the-art accuracy for several segmentation tasks in medical imaging.

A standard multi-resolution neural network makes use of a concept of combining image patches of different resolution for pixel-wise classification. On each resolution level, image features are extracted using standard convolutional layers. Then, feature maps of coarse levels are successively up-sampled and combined with the next finer level. In this way, segmentations of the original image resolution are obtained while having a large perceptive field to take extensive image context into account.

For the purposes of this disclosure, this general idea is employed for use in generating or predicting offsets. Thus, if used, the multi-resolution neural network has been trained and/or configured such that the output layer of size N×M×P holds the offsets, where P is the number of offsets generated for each initial location (and NxM is equal to the number of initial locations).

It will be appreciated that, by design, the output layer containing the offsets has a much smaller resolution than the input layer to the multi-resolution neural network. Thus, the standard multi-resolution neural network (previously described) should be modified to make use of a down-sampling strategy, rather than an up-sampling strategy. This means that, instead of up-sampling coarse levels and combining them with finer levels as in the architecture described above, fine levels are successively down-sampled and combined with coarser levels.

Methods of training a machine-learning algorithm are well known. Typically, such methods comprise obtaining a training dataset, comprising training input data entries and corresponding training output data entries. This is commonly called "ground truth data". An initialized machine-learning algorithm is applied to each input data entry to generate predicted output data entries. An error (e.g., mean squared difference) between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

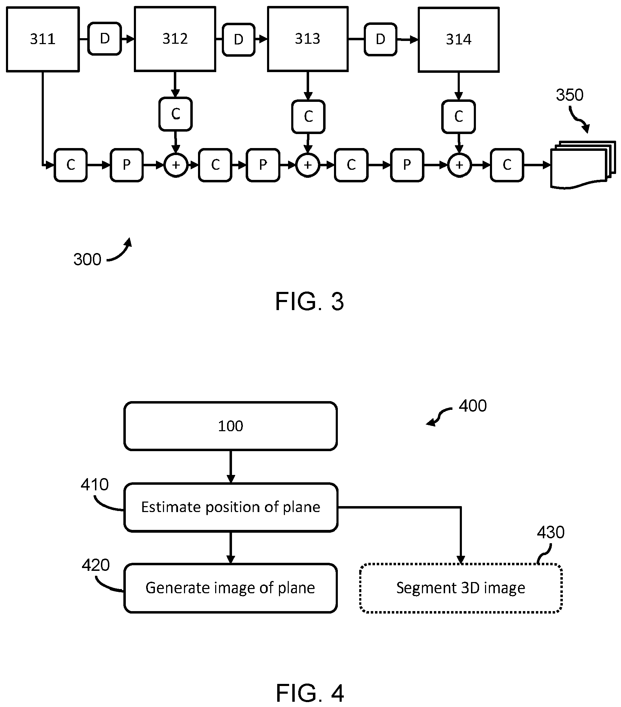

Fig. 3 illustrates the architecture of a multi-resolution neural network 300 that can be employed in embodiments of the present invention.

The neural network 300 produces output data 350 containing a set of one or more first offsets for each initial location and a set of one or more second offsets for each initial location.

Where appropriate, blocks labelled "C" represent a convolution process performed on data (e.g., a process comprising convolution, batch-normalization and ReLU (Rectified Linear Unit), also known as CBR (Convolution-BatchNorm-ReLU)). Similarly, blocks labelled "P" represent a pooling process performed on data. Blocks labelled D represent a down-sampling process, which may itself be a pooling process such as a max or average pooling process.

Image data 311 is processed to produce the output data. The image data 311 comprises the 3D image data and/or a portion thereof. The image data is successively down-sampled to produce down-sampled image data 312, 313, 314 of smaller resolutions. At each resolution level, image features are extracted using one or more standard convolutional layers (in convolution process C). Then, feature maps of finer levels are successively down-sampled (e.g., using a pooling procedure P) and combined, e.g., summed, with the next coarser level.

Fig. 4 illustrates a method 400 according to an embodiment, which makes use of the generated offsets.

The method 400 comprises performing the method 100, previously described, to generate the offsets.

The method 400 also comprises a step 410 of estimating the position of the desired plane within the 3D image by processing the set of initial locations and the set of one or more first predicted offsets produced for each initial location.

Step 410 can be performed, for instance, by processing the set of initial locations and the set of first predicted offsets produced for each initial location using a linear regression technique to identify the position/location of the desired plane within the 3D image.

For instance, assuming that each initial location within the 2D slice (lying in a plane x-y) can be represented by a value g_{xy}, then each initial location can be associated with a first offset o_{pxy}. The first offset o_{pxy} represents a determined offset between the initial location and a corresponding predetermined location within the desired plane p. By interpolating g_{xy} + o_{pxy} with o_{pxy} := (0,0,o_{pxy})^{T} using linear regression, the position of the desired plane within the 3D image can be located.

It is noted that, for each initial location, the corresponding predetermined location is the intersection point of the desired plane and the line through the initial location g_{xy} in a direction normal to the plane of the 2D slice. Therefore, it is possible to estimate an offset to the desired plane, from the initial location, using a single offset o_{pxy}.

An approach for performing linear regression to determine the position of the desired plane is disclosed by Schmidt-Richberg, Alexander, et al. "Offset regression networks for view plane estimation in 3D fetal ultrasound." Medical Imaging 2019: Image Processing. Vol. 10949. SPIE, 2019. This same document also discloses approaches for determining the offset(s).

In this scenario, each initial location is associated with a (single) different, respective desired location within the desired plane of the 3D image for viewing the target anatomical structure. Thus, for each initial location, the set of one or more first predicted offsets comprises (only) a single predicted offset being a predicted spatial offset between the initial location and its respective desired location.

The method 400 can then perform a step 420 of processing the 3D image, using the estimated position of the desired plane, to produce a 2D image representing the desired plane. This can effectively comprise extracting a slice of the 3D image to form a 2D plane.

It will be appreciated that is not essential that step 420 be performed. Rather, other uses can be made of the determined location of the desired plane within the 3D image.

For instance, the determined location can be used to guide an individual to move an image capturing system to capture the desired plane more accurately.

In another use case scenario, the determined location can be used to initialize a deformable segmentation model for performing segmentation of the 3D image. Thus, the method 400 may comprise a step 430 of processing the 3D image using an image segmentation technique, using the detemrined location of the desired plane to initialize the segmentation.

It will be appreciated that the sets of one or more second offsets can be used to similar effect to identify the location of the anatomical landmark(s). This can, for instance, be used to produce one or more images containing a representation of the anatomical landmark(s).

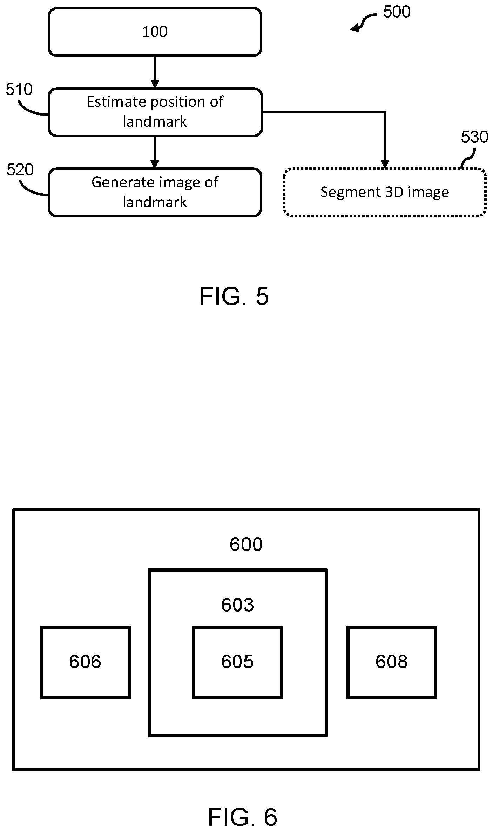

This approach is conceptually illustrated by Fig. 5, which illustrates a method according to an embodiment.

The method 500 also comprises performing the method 100, previously described, to generate the offsets. In this approach, each set of one or more second offsets generated for each initial location contains an offset between the corresponding initial location and a same first anatomical landmark. Thus, each set of one or more second offsets represents an offset to a same anatomical landmark.

The method 500 may then comprise a step 510 of processing each set of one or more second offsets to estimate or identify the location of the anatomical landmark 1.

For instance, assuming that each initial location within the 2D slice (lying in a plane x-y) can be represent by a value g_{xy}, then each initial location can be associated with a second offset o_{lxy} (representing a spatial offset to the first anatomical landmark 1). The location of the first anatomical landmark within the 3D image can be determined by, for instance, computing the mean or median value of g_{xy} + o_{lxy} across all initial locations. Other interpolation procedures could be used (instead of determining a mode or median value) to predict the location of the first anatomical landmark.

The method 500 may then perform a step 520 of processing the 3D image, using the determined location of the first anatomical landmark, to produce an output image (smaller than the 3D image) containing a representation of the first anatomical landmark. This may comprise, for instance, selecting a slice of the 3D image that contains the determined location of the first anatomical landmark. Alternatively, this may comprise extracting a smaller 3D image from the 3D image that contains the determined location of the first anatomical landmark therein.

It will similarly be appreciated that is not essential that step 520 be performed. Rather, other uses can be made of the determined location of the anatomical landmark.

For instance, the determined location can be used to guide an individual to move an image capturing system to capture the anatomical landmark more accurately.

In another use case scenario, the determined location can be used to initialize a deformable segmentation model for performing segmentation of the 3D image. Thus, the method 500 may comprise a step 530 of processing the 3D image using an image segmentation technique, using the determined location of the anatomical landmark to initialize the segmentation.

As previously explained, in some embodiments, each set of one or more second predicted offsets comprises a plurality of second predicted offsets, wherein each second predicted offset in a same set is a predicted spatial offset, with respect to the 3D image, between the initial location and a location of a same anatomical landmark, outside of the desired plane, of the target anatomical structure.

The same averaging procedure can be employed to determine the location of the first anatomical landmark within the 3D image.

It will be appreciated that it is possible to adopt the proposed techniques for generating an image for each of a plurality of anatomical landmarks.

In particular, the machine-learning method may be configured to generate, for each initial location and each anatomical landmark, a set of one or more predicted offsets, each offset in a same set representing an offset between the initial location and the additional anatomical landmark. For each anatomical landmark, the sets of predicted offsets associated therewith may then be processed to determine or predict the location of the anatomical landmark within the 3D image, e.g., using a previously described approach.

The determined locations can be used to a similar effect to the determination of a single landmark, e.g., to initialize an image segmentation procedure or to guide an operator to generate new image data that more completely captures the landmark(s).

Of course, in some embodiments, both methods 400 and 500 may be performed.

With reference to at least Fig. 1, in previously described approaches, a machine-learning algorithm outputs a plurality of offsets, including at least a set of one or more first offsets and a set of one or more second offsets for each initial location.

In some examples, the step 140 of processing the 2D slice using a machine-learning method further comprises producing, for each predicted offset, a confidence value representing a confidence or certainty of the predicted offset.

Approaches for determining a confidence value of data predicted using a machine-learning method are well known in the art. Example approaches are set out by Kendall, A., Gal, Y., 2017. What uncertainties do we need in bayesian deep learning for computer vision?, in: Advances in Neural Information Processing Systems, as well as by van der Waa, Jasper, et al. "ICM: an intuitive model independent and accurate certainty measure for machine learning." ICAART (2). 2018.

If the predicted offset(s) are used to determine the location of the desired plane within the 3D image and/or the location of the desired anatomical features, then the confidence value(s) can be used during the determination process. In particular, the confidence values can be used to weight the value of each offset used in determining the location(s).

Thus, for each offset, a confidence value can be estimated to express the confidence of the machine-learning algorithm in the estimate. These confidence values can then be employed for a weighted interpolation of the planes/landmarks.

For instance, if the position of the desired plane is located by interpolating g_{xy} + o_{pxy} with o_{pxy} := (0,0,o_{pxy})^{T} using linear regression, then the confidence values could be used to perform a weighted linear regression, e.g., a weighted least squares algorithm. The value of the weights or weighting factors may be equal to the confidence value(s).

As another example, if the location of the first anatomical landmark within the 3D image is determined by computing the mean or median value of g_{xy} + o_{lxy} across all initial locations, then a weighted mean or median value can be determined using an appropriate equation (e.g., a weighted arithmetic mean). The weights used in determining the mean/median using such a technique may be the confidence values.

Previously described embodiments propose approaches that use a machine-learning algorithm to determine or predict offsets from initial locations to locations within a desired plane and/or a location of an anatomical landmark.

In particular, embodiments make use of the recognition that machine-learning algorithms trained to determine or predict information defining the location of a desired plane within a 3D image show improved performance if they simultaneously predict the location of one or more anatomical landmarks outside the desired plane. This is because, during an earlier training process, the location of the one or more anatomical landmarks provides additional ground-truth data for training the machine-learning algorithm, as well as reducing a likelihood of overfitting.

It is possible to make use of this same underlying inventive recognition to performed improved training of a machine-learning algorithm.

Thus, there is also proposed a computer-implemented method for training a machine-learning method for predicting the location of a desired plane in a desired 3D image. This computer-implemented method makes use of the same inventive recognition of the previously described method for using a machine-learning method.

The computer-implemented method comprises obtaining a training dataset comprising a plurality of training entries. Each training entry comprising an example 3D image of a target anatomical structure; first information identifying a location of a desired plane within the example 3D image and second information identifying a location of one or more anatomical landmarks, outside of the desired plane, within the example 3D image.

The training dataset may, for instance, be obtained from a database or other storage system. The training dataset may be originally generated by a suitably trained or experienced clinician labelling difference instances or examples of 3D image data to identify the location a desired plane and/or location of one or more anatomical landmarks.

The computer-implemented method also comprises training, using the training dataset, the machine-learning method to predict information identifying the location of the desired plane in the desired 3D image and information identifying the location of one or more anatomical landmarks, outside of the desired plane, in the desired 3D image.

The information identifying the location of the desired plane in the desired 3D image may, for instance, be a set of one or more first offsets. Each first predicted offset is a predicted spatial offset, with respect to the 3D image, between an initial location and a predetermined location within a desired plane of the 3D image. Each predetermined location may, for instance, be located within a cell of a grid of cells overlaying the 2D plane. The location of predetermined location with its respective cell may be predetermined.

Each initial location can be defined by processing the 2D slice using an object detection technique to identify a bounding region containing a representation of the target anatomical structure; and defining, within the bounding region, a set of initial locations.

The information identifying the location of one or more anatomical landmarks, outside of the desired plane, may comprise a set of one or more second predicted offsets, each second predicted offset being a predicted spatial offset, with respect to the 3D image, between said initial location and a location of an anatomical landmark, outside of the desired plane, of the target anatomical structure.

Suitable examples of machine-learning algorithms have been previously described, but the machine-learning algorithm is preferably a neural network and more preferably a multi-dimensional neural network.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as random access memory (RAM), programmable read only memory (PROM), erasable programmable read only memory (EPROM), and electrically erasable programmable read only memory (EEPROM). The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

Fig. 6 shows a schematic of a processor circuit 600, according to an embodiment. As shown, the processor circuit 600 may include a processor 606, a memory 603, and a communication module 608. These elements may be in direct or indirect communication with each other, for example via one or more buses.

The processor 606 as envisaged by the present disclosure may include a central processing unit (CPU), a graphical processing unit (GPU), a digital signal processor (DSP), an application specific integrated circuit (ASIC), a controller, a field programmable gate array (FPGA) device, another hardware device, a firmware device, or any combination thereof configured to perform the operations described herein. The processor 606 may also be implemented as a combination of computing devices, e.g., a combination of a DSP and a microprocessor, a plurality of microprocessors, one or more microprocessors in conjunction with a DSP core, or any other such configuration. The processor 606 may also implement various deep learning networks, which may include a hardware or a software implementation. The processor 606 may additionally include a preprocessor in either hardware or software implementation.

The memory 603 as envisaged by the present disclosure may be any suitable storage device, such as a cache memory (e.g., a cache memory of the processor 606), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. The memory may be distributed among multiple memory devices and/or located remotely with respect to the processor circuit. In an embodiment, the memory 603 may store instructions 605. The instructions 605 may include instructions that, when executed by a processor 606, cause the processor 606 to perform the operations described herein.

Instructions 605 may also be referred to as code. The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements. Instructions 605 may be in the form of an executable computer program or script. For example, routines, subroutines and/or functions may be defined in a programming language including but not limited to C, C++, C#, Pascal, BASIC, API calls, HTML, XHTML, XML, ASP scripts, JavaScript, FORTRAN, COBOL, Perl, Java, ADA, .NET, and the like. Instructions may also include instructions for machine learning, deep learning and/or training of a machine learning module.

The communication module 608 can include any electronic circuitry and/or logic circuitry to facilitate direct or indirect communication of data between the processor circuit 600, and for example an external display (not shown) and/or an imaging device or system such as an X-ray imaging system. In that regard, the communication module 608 can be an input/output (I/O) device. The communication may be performed via any suitable means. For example, the communication means may be a wired link, such as a universal serial bus (USB) link or an Ethernet link. Alternatively, the communication means may be a wireless link, such as an ultra-wideband (UWB) link, an Institute of Electrical and Electronics Engineers (IEEE) 802.11 WiFi link, or a Bluetooth link.

It will be understood that disclosed methods are preferably computer-implemented methods. As such, there is also proposed the concept of a computer program comprising code for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores the computer program.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage.

If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method (100) of processing a 3D image of a target anatomical structure, the computer-implemented method comprising:
obtaining (110) a 2D slice (210) of the 3D image;
processing (120) the 2D slice using an object detection technique to identify a bounding region (220) containing a representation of the target anatomical structure;
defining (130), within the bounding region, a set of initial locations (221, 222); and
processing (140) the 3D image using a machine-learning method to predict, for each initial location:
a set of one or more first predicted offsets (251, 252), each first predicted offset being a predicted spatial offset, with respect to the 3D image, between said initial location and a predetermined location within a desired plane (230) of the 3D image; and
a set of one or more second predicted offsets (261, 262), each second predicted offset being a predicted spatial offset, with respect to the 3D image, between said initial location and a location of an anatomical landmark (240), outside of the desired plane, of the target anatomical structure.

2. The computer-implemented method of claim 1, further comprising a step of processing the set of initial locations, the sets of one or more first predicted offsets and the 3D image to produce at least one image, smaller than the 3D image, containing a representation of one or more of the one or more desired locations.

3. The computer-implemented method of claim 1 or 2, wherein:
each initial location is associated with a different, respective desired location within the desired plane of the 3D image for viewing the target anatomical structure; and
for each initial location, the set of one or more first predicted offsets comprises a single predicted offset being a predicted spatial offset between the initial location and its respective desired location.

4. The computer-implemented method of claim 3, further comprising:
estimating (410) the position of the desired plane within the 3D image by processing the set of initial locations and the set of first predicted offsets produced for each initial location; and
processing (420) the 3D image, using the estimated position of the desired plane, to produce a 2D image representing the desired plane.

5. The computer-implemented method of claim 4, wherein estimating the position of the desired plane within the 3D image is performed by processing the set of initial locations and the set of first predicted offsets produced for each initial location using a linear regression technique.

6. The computer-implemented method of any of claims 1 to 5, wherein each second predicted offset is a predicted spatial offset, with respect to the 3D image, between an initial location and a location of a same first anatomical landmark of the target anatomical structure.

7. The computer-implemented method of any of claims 1 to 6, wherein each set of one or more second predicted offsets comprises a plurality of second predicted offsets.

8. The computer-implemented method of any of claims 1 to 7, wherein the step of defining, within the bounding region, a set of initial locations comprises:
defining a grid of cells within the bounding region; and
identifying a single location in each cell to thereby define the plurality of initial locations.

9. The computer-implemented method of any of claims 1 to 8, wherein the 3D image is defined by a stack of initial 2D slices and the 2D slice is closer to the centermost slice of the stack of initial 2D slices than either the first or last 2D slice in the stack of initial 2D slices.

10. The computer-implemented method of any of claims 1 to 9, wherein the step of processing the 2D slice using a machine-learning method further comprises producing, for each predicted offset, a confidence value representing a confidence or certainty of the predicted offset.

11. The computer-implemented method of claim 10, further comprising estimating (410) the position of the desired plane within the 3D image by processing the set of initial locations and the set of first predicted offsets produced for each initial location using a linear regression technique,
wherein the value of one or more weighting parameters of the linear regression technique are responsive to the confidence value of one or more predicted offsets.

12. A computer-implemented method of training a machine-learning method for predicting the location of a desired plane in a desired 3D image, the computer-implemented method comprising:
obtaining a training dataset comprising a plurality of training entries, each training entry comprising an example 3D image of a target anatomical structure; first information identifying a location of a desired plane within the example 3D image and second information identifying a location of one or more anatomical landmarks, outside of the desired plane, within the example 3D image; and
training, using the training dataset, the machine-learning method to predict information identifying the location of the desired plane in the desired 3D image and information identifying the location of one or more anatomical landmarks, outside of the desired plane, in the desired 3D image.

13. A computer program product comprising computer program code which, when executed on a computing device having a processing system, cause the processing system to perform all of the steps of the method according to any of claims 1 to 12.

14. A processing system for processing a 3D image of a target anatomical structure, the processing system being configured to carry out the method of any of claims 1 to 11.

15. The processing system of claim 14, wherein the processing system is further configured to process the set of initial locations, at least one set of one or more predicted offsets and the 3D image to produce at least one image, smaller than the 3D image, containing a representation of one or more of the one or more desired locations.
